# EUROPÄISCHE PATENTSCHRIFT

(11) **EP 3 500 140 B1**
(45) Veröffentlichungstag und Bekanntmachung des Hinweises auf die Patenterteilung: **06.07.2022**
(21) Anmeldenummer: 17737613.4
(22) Anmeldetag: 14.07.2017
(51) Int. Cl.: A47J 31/36, A47J 31/44

(54) **VORRICHTUNG ZUR ZUBEREITUNG EINES GETRÄNKES**
DEVICE FOR PREPARING A BEVERAGE
DISPOSITIF DE PRÉPARATION D'UNE BOISSON

(30) Priorität: 17.08.2016 CH 10602016
(43) Veröffentlichungstag der Anmeldung: 26.06.2019
(73) Patentinhaber: Delica AG, 5033 Buchs AG (CH)
(72) Erfinder: BRÖNNIMANN, Markus, 3274 Hermrigen (CH); AFFOLTER, Roland, 5103 Möriken (CH)
(74) Vertreter: Hepp Wenger Ryffel AG
(86) Internationale Anmeldenummer: PCT/EP2017/067894
(87) Internationale Veröffentlichungsnummer: WO 2018/033312

(56) Entgegenhaltungen:
- EP-A1- 3 028 608
- WO-A1-2015/004552
- CH-A1- 707 374
- GB-A- 2 449 213

## Beschreibung

Die vorliegende Erfindung betrifft eine Vorrichtung zur Zubereitung eines Getränkes aus zumindest einer in einer Portionsverpackung enthaltenen Substanz gemäss dem Oberbegriff von Anspruch 1 sowie ein Getränkezubereitungssystem umfassend eine derartige Vorrichtung und eine Portionsverpackung mit einer Kennung.

Getränkezubereitungssysteme für die Zubereitung von Kaffee oder Tee sind heutzutage insbesondere in Privathaushalten weit verbreitet. Für die jeweiligen Systeme sind Portionsverpackungen mit verschiedenen Kaffee- oder Teesorten im Handel erhältlich. Die Getränkezubereitung erfolgt in der Regel durch Einlegen einer entsprechenden Portionsverpackung in eine dafür vorgesehene Vorrichtung zum Extrahieren oder Auflösen einer darin enthaltenen Substanz durch Durchleiten einer Flüssigkeit. Nach erfolgter Getränkeherstellung wird die Portionsverpackung aus der Vorrichtung entfernt und in der Regel entsorgt.

Damit mit ein und derselben Vorrichtung Portionsverpackungen mit unterschiedlichem Inhalt (bspw. verschiedene Kaffee- oder Teesorten) verarbeitet werden können, besteht das Bedürfnis, die Vorrichtung in Abhängigkeit der jeweils verwendeten Packung zu steuern. Dies betrifft beispielsweise die durchgeleitete Menge an Flüssigkeit, die Extraktionstemperatur oder auch die Extraktionsgeschwindigkeit. Aus Sicherheitsgründen soll darüber hinaus verhindert werden, dass die Maschine mit nicht kompatiblen Portionsverpackungen betrieben wird.

Zu diesem Zweck ist es grundsätzlich bereits bekannt, eine Portionsverpackung mit einer Kennung und eine Vorrichtung mit Mitteln zum Erfassen der Kennung auszurüsten. So beschreibt die CH 707 374 A1 ein Getränkeherstellungssystem mit Kapseln auf deren Deckel jeweils ein maschinenlesbarer Code angeordnet ist. Die entsprechende Getränkezubereitungsmaschine weist ein Lesegerät für den Code auf, das mit einer Steuervorrichtung verbunden ist, mit welcher in Abhängigkeit vom eingelesenen Code die Betriebsparameter der Getränkezubereitungsmaschine steuerbar sind. Das besagte Getränkeherstellungssystem erlaubt damit eine benutzerfreundliche Erkennung des jeweils verwendeten Kapseltyps.

Bei derartigen Systemen besteht allerdings das Problem, dass es leicht zu einer Verschmutzung der in der Maschine angeordneten Mitteln zum Erfassen der Kennung (bspw. einem Lesegerät) kommen kann. Ursache dafür können in der Maschine zurückgebliebene Kaffee- oder Teereste, Kalkablagerungen oder Staub sein. Durch die Verschmutzung wird die Zuverlässigkeit der Erkennung der Portionsverpackung erheblich herabgesetzt. Bei falschem oder ausbleibendem Erkennen der Packung kann es zu Funktionsstörungen der Maschine kommen. Dies bedeutet eine signifikante Herabsetzung des Bedienungskomforts für den Benutzer.

Die EP 3 028 608 A1 beschreibt die Verhinderung eines beschlagenen Lesefensters durch den Einbau eines entsprechenden Lüftungsventilators. Die GB 2 449 213 A beschreibt einen Dampfstoss, welcher zur Reinigung der Aussparung für die Aufstecheinheit, der Auflagefläche und der Klemmvorrichtung eingesetzt werden kann.

Es ist daher eine Aufgabe der vorliegenden Erfindung, diese Nachteile im Stand der Technik zu überwinden. Insbesondere ist es eine Aufgabe der Erfindung, eine Vorrichtung zur Zubereitung eines Getränkes der obengenannten Art zu schaffen, bei der die Zuverlässigkeit der Erkennung einer Portionsverpackung verbessert ist.

Diese Aufgabe wird durch eine Vorrichtung gelöst, welche die Merkmale im Anspruch 1 aufweist. Die Vorrichtung zur Zubereitung eines Getränkes aus zumindest einer in einer Portionsverpackung enthaltenen Substanz umfasst eine zur Aufnahme der Portionsverpackung ausgebildete Kammer, welche aus zumindest zwei zwischen einer Offenstellung und einer Schliessstellung relativ zueinander beweglichen Kammerteilen besteht. Ferner umfasst die Vorrichtung Mittel zum Durchleiten einer Flüssigkeit durch die Kammer sowie optische Detektionsmittel zum Erfassen einer an oder in der Portionsverpackung angebrachten Kennung. Darüber hinaus umfasst die Vorrichtung Reinigungsmittel zum Reinigen einer detektionsseitigen Grenzfläche der optischen Detektionsmittel. Bei der detektionsseitigen Grenzfläche der optischen Detektionsmittel kann es sich beispielsweise um eine Linse, die Scheibe eines Fensters oder auch einen Spiegel handeln.

Durch die Implementierung von Reinigungsmitteln zum Reinigen der detektionsseitigen Grenzfläche der optischen Detektionsmittel können diese im Rahmen des Betriebs der Vorrichtung von Verschmutzungen befreit werden. Dadurch ist eine weitaus zuverlässigere Erfassung der an oder in der Portionsverpackung angebrachten Kennung möglich. Dies erlaubt einen deutlich störungsfreieren Betrieb der Vorrichtung.

Die Reinigungsmittel sind durch Bewegen der Kammerteile zwischen der Offenstellung und der Schliessstellung betätigbar. Bei einer derartigen Ausgestaltung der Vorrichtung erfolgt eine Reinigung der detektionsseitigen Grenzfläche der optischen Detektionsmittel bei jedem Verwendungszyklus. Es wird dem Benutzer damit verunmöglicht, das Auslösen der Reinigung über einen längeren Zeitraum zu unterlassen, was den störungsfreien Betrieb der Vorrichtung zusätzlich begünstigt.

Die Vorrichtung kann zumindest eine Führungsplatte zum Führen von zumindest einem Kammerteil zwischen einer Offenstellung und einer Schliessstellung entlang einer Achse A umfassen. Diese mechanische Ausführung stellt einen konstruktiv besonders einfachen und robusten Schliessmechanismus für die Kammer dar. Die optischen Detektionsmittel können an der Führungsplatte angeordnet sein. Dieser Ort bietet sich an, da er eine stabile Anbringung der optischen Detektionsmittel ermöglicht. Die Kammer kann aus einem ersten feststehenden Kammerteil und einem zweiten beweglichen Kammerteil aufgebaut sein. Diese mechanisch einfache Ausgestaltung des Schliessmechanismus der Kammer hat sich in der Praxis bewährt. Die optischen Detektionsmittel können senkrecht zur Achse A ausgerichtet sein. Dies ermöglicht eine seitliche Erfassung der an oder in der Portionsverpackung angebrachten Kennung.

Die Vorrichtung kann Haltemittel zum Halten der Portionsverpackung in einer Zwischenstellung zwischen den Kammerteilen in der Offenstellung aufweisen. Dadurch kann die Portionsverpackung beim Einlegen in die Vorrichtung erst von den Haltemitteln in einer günstigen Position gehalten werden, bevor sie in die Kammer eingesetzt und diese verschlossen wird. Die optischen Detektionsmittel können derart angeordnet sein, dass die Kennung in der Zwischenstellung erfassbar ist. Da die Portionsverpackung nach Einlegen in die Vorrichtung üblicherweise einige Zeit in der Zwischenstellung ruht, bietet sich dieser Zeitraum zum Erfassen der an oder in der Portionsverpackung angebrachten Kennung an.

Die Vorrichtung kann eine Einwurföffnung zum Einwerfen der Portionsverpackung unter Schwerkrafteinwirkung durch einen Einwurfschacht aufweisen. Dies ermöglicht ein besonders benutzerfreundliches Einsetzen der Portionsverpackung in die Vorrichtung. Diese Ausgestaltung hat entsprechend bei Benutzern derartiger Vorrichtungen grosse Akzeptanz gefunden und ist gegenwärtig insbesondere bei Kapsel-Kaffeemaschinen weitverbreitet. Die optischen Detektionsmittel können derart angeordnet sein, dass die Kennung beim Durchlaufen der Portionsverpackung des Einwurfschachtes erfassbar ist. Dies hat den Vorteil, dass die optische Detektionsvorrichtung nicht im Bereich des Schliessmechanismus der Kammer angebracht werden muss, was eine insgesamt einfachere Konstruktion der Vorrichtung ermöglicht.

Die Reinigungsmittel können an einem beweglichen Kammerteil, insbesondere an einer Seitenplatte eines solchen, angebracht sein. Da einzelne Kammerteile zum Schliessen der Kammer naturgemäss bewegt werden müssen, kann durch eine Anbringung der Reinigungsmittel an diesen Kammerteilen eine Bewegung derselben einfach erzielt werden.

Die optischen Detektionsmittel können als Kameramodul ausgebildet sein. Dies ermöglicht das Erfassen einer Vielzahl verschiedenartiger Kennungen, wie zum Beispiel eindimensionale Strichcodes, 2D-Codes (bspw. gestapelte Codes {Codablock, Code 49, PDF417}, Matrix-Codes {QR-Code, Data-Matrix, Maxi-Code, Aztec-Code}, Punktcodes oder Composite-Codes), weitere optoelektronisch lesbare Schriften oder Farbkodierungen. Derartige Kennungen sind im Stand der Technik weit verbreitet. Sie weisen in Zusammenhang mit ihrer Erfassung eine hohe Zuverlässigkeit auf, und es steht eine Reihe von verschiedenen Systemen zur Verfügung, mit denen sie ausgelesen werden können.

Die Detektionsmittel können auch als Reflexlichtschranke mit einem Sender und einem Empfänger ausgebildet sein, wobei der Sender insbesondere Laserstrahlung und/oder Infrarotstrahlung emittiert. Unter dem Begriff Reflexlichtschranke werden in diesem Zusammenhang jegliche optoelektronischen Vorrichtungen verstanden, welche durch Emittieren und Detektieren von Licht Gegenstände oder Muster detektieren können. Reflexlichtschranken sind in der Regel einfacher ausgebildet als Kameramodule, kommen mit einem einfacheren Auswertungsalgorithmus aus und zeichnen sich üblicherweise durch einen geringeren Preis und eine grössere Robustheit aus.

Die Reinigungsmittel können insbesondere als taktile Reinigungsmittel ausgebildet sein. Dies ermöglicht eine überaus zuverlässige und einfache Reinigung der detektionsseitigen Grenzfläche der optischen Detektionsmittel. Die Reinigungsmittel können als Wischblatt, insbesondere aus einem Elastomer, ausgebildet sein. Dies erlaubt eine im Wesentlichen rückstandsfreie Reinigung der detektionsseitigen Grenzfläche der optischen Detektionsmittel. Alternative Beispiele für taktile Reinigungsmittel wären ein Schwamm oder ein Wischtuch.

Allerdings ist die vorliegende Erfindung nicht auf taktile Reinigungsmittel beschränkt. Ein Beispiel für nicht-taktile Reinigungsmittel wären Mittel mit einer Düse, welche einen Gas- oder Flüssigkeitsstrahl erzeugen, um die detektionsseitigen Grenzfläche der optischen Detektionsmittel zu reinigen.

Die Vorrichtung kann eine mit den optischen Detektionsmitteln verbundene Steuervorrichtung aufweisen, durch die in Abhängigkeit der mit den optischen Detektionsmitteln erfassten Kennung die Betriebsparameter der Vorrichtung steuerbar sind. Dies ermöglicht eine Vielzahl von Anwendungen. So kann zum Beispiel die durch die Portionsverpackung geleitete Menge an Flüssigkeit, die Extraktions- bzw. die Lösungstemperatur oder auch die Extraktionsgeschwindigkeit basierend auf der erfassten Kennung der Portionsverpackung eingestellt werden. Bei nicht vollständig erfasster oder nicht bekannter Kennung können die Betriebsparameter der Vorrichtung allerdings auch manuell einstellbar oder Funktionen der Vorrichtung automatisch blockierbar sein. Damit kann die Sicherheit der Vorrichtung signifikant erhöht werden, da diese bei Einsetzen einer nicht kompatiblen Portionsverpackung automatisch gesperrt werden kann.

Ein weiterer Aspekt der Erfindung betrifft ein Getränkezubereitungssystem umfassend eine oben beschriebene Vorrichtung und eine Portionsverpackung mit einer Kennung. Die Portionsverpackung kann eine Kapsel mit einem vorzugsweise rotationssymmetrisch ausgebildeten Kapselkörper bestehend aus einem Boden und einer Seitenwand sowie einem den Kapselkörper abdeckenden Deckel sein, wobei die Kennung vorzugsweise an der Seitenwand angeordnet ist. Besonders bevorzugt kann die an der Kapsel angebrachte Kennung als ein um die Seitenwand umlaufender Code ausgeführt sein. Dies hat den Vorteil, dass die Kapsel hinsichtlich einer Rotation um ihre Längsmittelachse in einer beliebigen Winkelposition in die Vorrichtung eingeführt werden kann, wobei sich die an der Kapselseitenwand angebrachte Kennung den Detektionsmitteln stets auf die gleiche Weise präsentiert.

Weitere Vorteile und Einzelmerkmale der Erfindung ergeben sich aus der nachfolgenden Beschreibung eines Ausführungsbeispiels und aus den Zeichnungen.

Es zeigen schematisch:
- Figur 1:: Perspektivische Teilansicht einer erfindungsgemässen Vorrichtung mit einer Kammer zur Aufnahme einer Portionsverpackung in Offenstellung;
- Figur 2:: Detektionsmittel und Reinigungsmittel gemäss Figur 1, für sich isoliert freigestellt;
- Figur 3:: Perspektivische Teilansicht einer Vorrichtung gemäss Figur 1 mit der Kammer in einer Stellung zwischen der Offenstellung und der Schliessstellung;
- Figur 4:: Detektionsmittel und Reinigungsmittel gemäss Figur 3, für sich isoliert freigestellt;
- Figur 5:: Perspektivische Teilansicht einer Vorrichtung gemäss den Figuren 1 und 2 mit der Kammer in Schliessstellung;
- Figur 6:: Detektionsmittel und Reinigungsmittel gemäss Figur 5, für sich isoliert freigestellt;
- Figur 7:: Perspektivische Teilansicht einer Vorrichtung gemäss den Figuren 1, 3 und 5, in welcher zusätzlich die Führungsplatten sichtbar sind;
- Figur 8:: Perspektivische Teilansicht einer Vorrichtung gemäss Figur 7 mit der Kammer in Offenstellung, jedoch mit den optischen Detektionsmitteln entfernt.

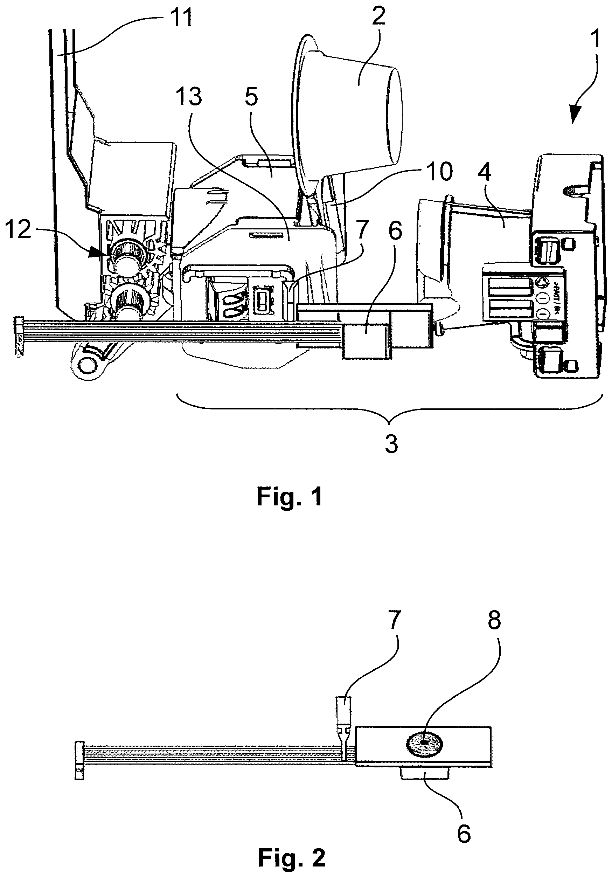

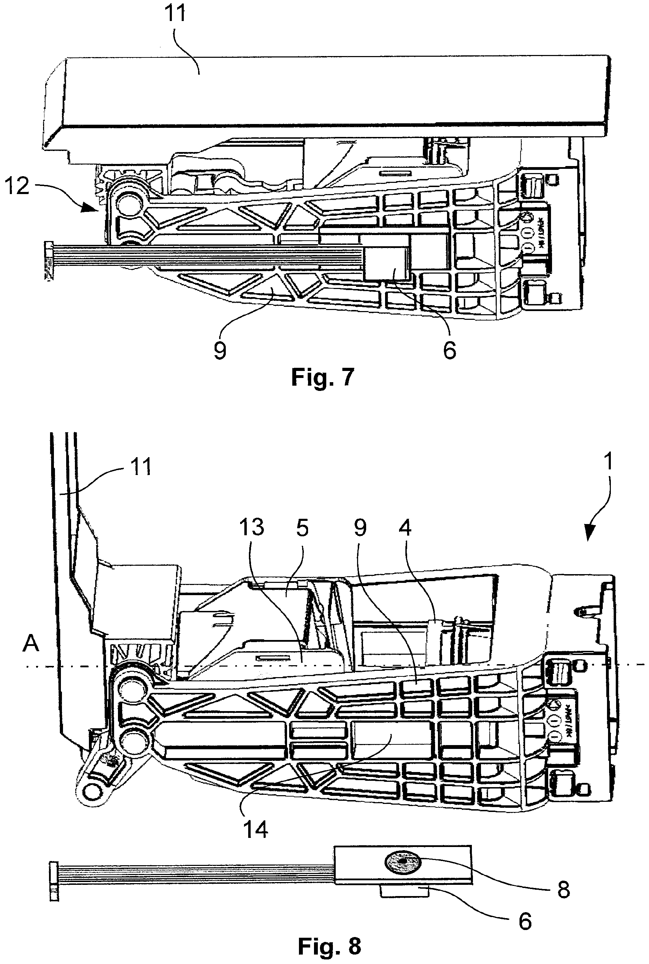

Wie aus Figur 1 hervorgeht, setzt sich beim gezeigten Ausführungsbeispiel einer erfindungsgemässen Vorrichtung 1 die Kammer 3 zur Aufnahme der Portionsverpackung 2 aus einem festen Kammerteil 4 und einem beweglichen Kammerteil 5 zusammen. Das bewegliche Kammerteil 5 ist entlang einer Achse A (in Figur 8 eingezeichnet) verschiebbar gelagert. Zum Verschliessen der Kammer 3 weist die Vorrichtung 1 einen Hebel 11 auf, mit dem das bewegliche Kammerteil 5 über ein Getriebe 12 gegen das feste Kammerteil 4 gepresst werden kann. Die Detektionsmittel 6 sind seitlich an der Kammer 3 angebracht, so dass eine an oder in der Portionsverpackung 2 angebrachte Kennung in der Offenstellung der Kammer erfassbar ist. Um die Portionsverpackung in der Offenstellung der Kammer 3 im Bereich der Detektionsmittel 6 zu halten, sind am beweglichen Kammerteil 5 Haltemittel 10 angebracht. Ferner weist das bewegliche Kammerteil 5 eine Seitenplatte 13 auf, an welcher die Reinigungsmittel 7, im vorliegenden Fall ein Wischblatt, zum Reinigen einer detektionsseitigen Grenzfläche 8 der optischen Detektionsmittel 6 angebracht sind.

Figur 2 zeigt die Detektionsmittel 6 und die Reinigungsmittel 7 gemäss Figur 1 leicht abgedreht und für sich alleingestellt. Aus dieser Perspektive ist die detektionsseitige Grenzfläche 8 der Detektionsmittel 6 gut erkennbar.

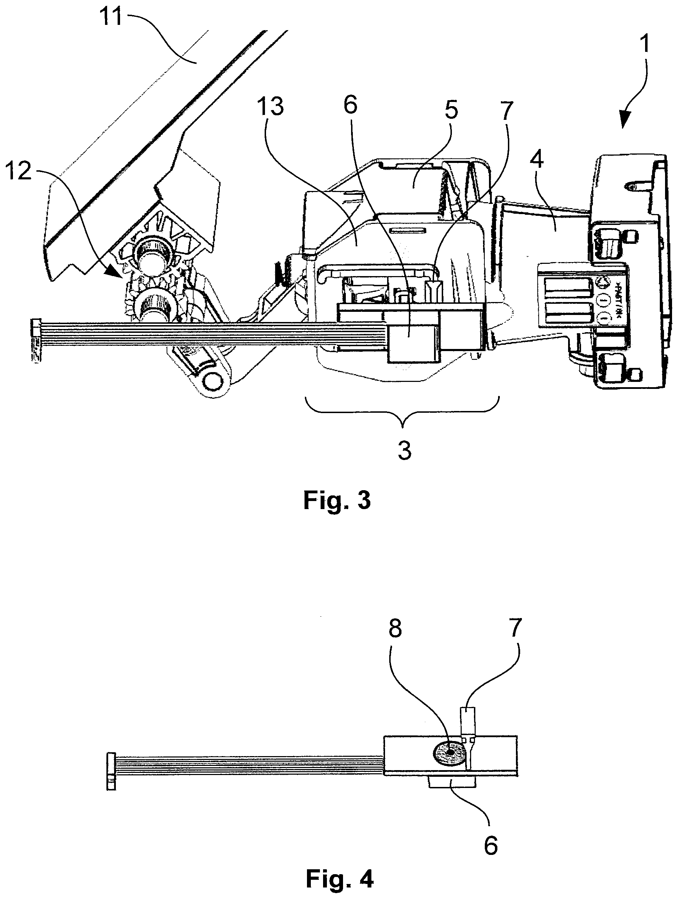

Figur 3 zeigt dieselbe Ausführungsform einer erfindungsgemässen Vorrichtung 1 wie Figur 1, wobei sich die Kammer 3 zur Aufnahme der Portionsverpackung 2 im Übergang zwischen ihrer Offenstellung und ihrer Schliessstellung befindet. Die Schliessstellung wird durch Herunterdrücken des Hebels 11 erreicht, wobei das bewegliche Kammerteil 5 durch das Getriebe 12 gegen das feste Kammerteil 4 gedrückt wird.

Figur 4 entspricht der Figur 2, jedoch in Bezug auf Figur 3 statt 1. Es ist zu erkennen, dass die Reinigungsmittel 7 beim Übergang des beweglichen Kammerteils 5 von der Offenstellung in die Schliessstellung über die detektionsseitige Grenzfläche 8 der Detektionsmittel 6 streicht.

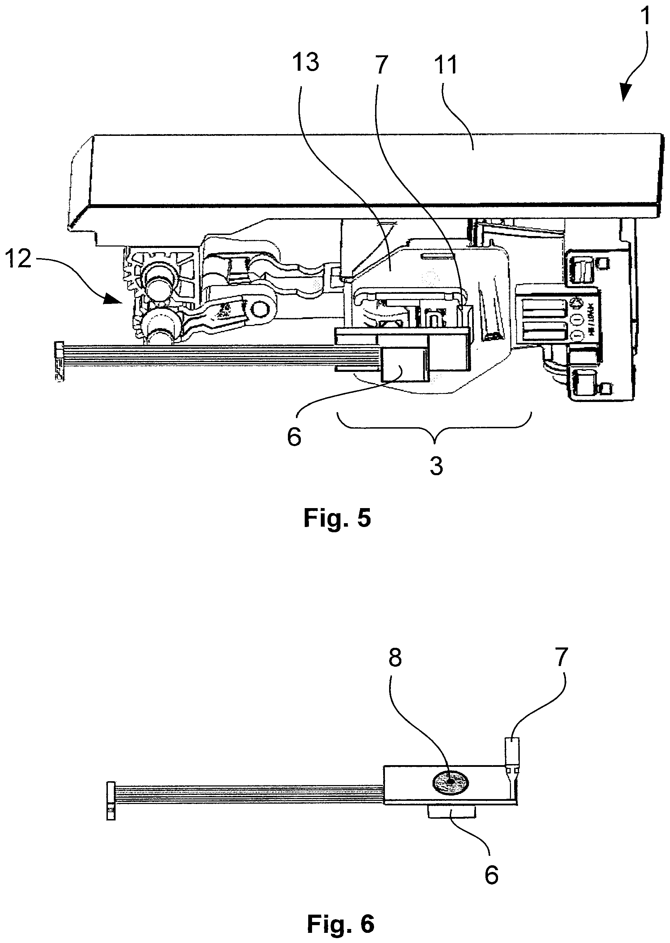

Figur 5 zeigt dasselbe Ausführungsbeispiel einer erfindungsgemässen Vorrichtung 1 mit der Kammer 3 zur Aufnahme der Portionsverpackung 2 in ihrer Schliessstellung. In Figur 6 ist die entsprechende Position der Reinigungsmittel 7 relativ zur detektionsseitigen Grenzfläche 8 der Detektionsmittel 6 besser erkennbar. Die Figur 7 entspricht der Figur 5, jedoch ist zusätzlich noch die Führungsplatte 9 sichtbar.

Auch Figur 8 zeigt dieselbe Ausführungsform einer erfindungsgemässen Vorrichtung 1, jedoch mit der Kammer 3 in ihrer Offenstellung und mit den optischen Detektionsmitteln 6 entfernt. Deutlich ist ein Fenster 14 in der Führungsplatte 9 zu erkennen, durch welches die optischen Detektionsmittel 6 die an oder in der Portionsverpackung 2 angebrachte Kennung erfassen können.

## Patentansprüche

1. Vorrichtung (1) zur Zubereitung eines Getränkes aus zumindest einer in einer Portionsverpackung (2) enthaltenen Substanz, umfassend:
- eine zur Aufnahme der Portionsverpackung (2) ausgebildete Kammer (3), welche aus zumindest zwei zwischen einer Offenstellung und einer Schliessstellung relativ zueinander beweglichen Kammerteilen (4,5) besteht,
- Mittel zum Durchleiten einer Flüssigkeit durch die Kammer,
- Optische Detektionsmittel (6) zum Erfassen einer an oder in der Portionsverpackung (2) angebrachten Kennung,
**dadurch gekennzeichnet, dass** die Vorrichtung (1) Reinigungsmittel (7) zum Reinigen einer detektionsseitigen Grenzfläche (8) der optischen Detektionsmittel (6) umfasst, wobei die Reinigungsmittel (7) durch Bewegen der Kammerteile (4,5) zwischen der Offenstellung und der Schliessstellung betätigbar sind.

2. Vorrichtung (1) nach Anspruch 1, **dadurch gekennzeichnet, dass** die Vorrichtung zumindest eine Führungsplatte (9) zum Führen von zumindest einem Kammerteil (5) zwischen der Offenstellung und der Schliessstellung entlang einer Achse (A) umfasst.

3. Vorrichtung (1) nach Anspruch 2, **dadurch gekennzeichnet, dass** die optischen Detektionsmittel (6) an der Führungsplatte angeordnet (9) sind.

4. Vorrichtung (1) nach einem der Ansprüche 2 oder 3, **dadurch gekennzeichnet, dass** die Kammer (3) aus einem ersten feststehenden Kammerteil (4) und einem zweiten beweglichen Kammerteil (5) aufgebaut ist.

5. Vorrichtung (1) nach einem der Ansprüche 2 bis 4, **dadurch gekennzeichnet, dass** die optischen Detektionsmittel (6) senkrecht zur Achse (A) ausgerichtet sind.

6. Vorrichtung (1) nach einem der Ansprüche 1 bis 5, **dadurch gekennzeichnet, dass** die Vorrichtung Haltemittel (10) zum Halten der Portionsverpackung (2) in einer Zwischenstellung zwischen den Kammerteilen (4, 5) in der Offenstellung aufweist und insbesondere die optischen Detektionsmittel (6) derart angeordnet sind, dass die Kennung in der Zwischenstellung erfassbar ist.

7. Vorrichtung (1) nach einem der Ansprüche 1 bis 6, **dadurch gekennzeichnet, dass** die Vorrichtung eine Einwurföffnung zum Einwerfen der Portionsverpackung (2) unter Schwerkrafteinwirkung durch einen Einwurfschacht aufweist und insbesondere die optischen Detektionsmittel (6) derart angeordnet sind, dass die Kennung beim Durchlaufen der Portionsverpackung (2) des Einwurfschachtes erfassbar ist.

8. Vorrichtung (1) nach einem der Ansprüche 1 bis 7, **dadurch gekennzeichnet, dass** die Reinigungsmittel (7) an einem beweglichen Kammerteil (5), insbesondere an einer Seitenplatte (13) eines solchen, angebracht sind.

9. Vorrichtung (1) nach einem der Ansprüche 1 bis 8, **dadurch gekennzeichnet, dass** die Reinigungsmittel (7) als taktile Reinigungsmittel ausgebildet sind.

10. Vorrichtung (1) nach Anspruch 9, **dadurch gekennzeichnet, dass** die Reinigungsmittel (7) als Wischblatt, insbesondere aus einem Elastomer, ausgebildet sind.

11. Vorrichtung (1) nach einem der Ansprüche 1 bis 10, **dadurch gekennzeichnet, dass** die Vorrichtung (1) eine mit den optischen Detektionsmitteln (6) verbundene Steuervorrichtung ausweist, durch die in Abhängigkeit der mit den optischen Detektionsmitteln (6) erfassten Kennung die Betriebsparameter der Vorrichtung (1) steuerbar sind.

12. Vorrichtung (1) nach Anspruch 11, **dadurch gekennzeichnet, dass** bei nicht vollständig erfasster oder nicht bekannter Kennung Betriebsparameter der Vorrichtung (1) manuell einstellbar oder Funktionen automatisch blockierbar sind.

13. Getränkezubereitungssystem umfassend eine Vorrichtung (1) nach einem der Ansprüche 1 bis 12 und eine Portionsverpackung (2) mit einer Kennung.

14. Getränkezubereitungssystem nach Anspruch 13, **dadurch gekennzeichnet, dass** die Portionsverpackung (2) eine Kapsel mit einem vorzugsweise rotationssymmetrisch ausgebildeten Kapselkörper bestehend aus einem Boden und einer Seitenwand sowie einem den Kapselkörper abdeckenden Deckel ist, wobei die Kennung vorzugsweise an der Seitenwand angeordnet ist.

15. Getränkezubereitungssystem nach Anspruch 14, **dadurch gekennzeichnet, dass** die an der Kapsel angebrachte Kennung als ein um die Seitenwand umlaufender Code ausgeführt ist.

## Claims

1. Device (1) for preparing a beverage from at least one substance contained in a portion package (2), comprising:
- a chamber (3) designed to receive the portion packaging (2), said chamber consists of at least two chamber parts (4, 5) movable relative to each other between an open position and a closed position,
- means for passing a liquid through the chamber,
- optical detection means (6) for detecting an identifier applied to or in the portion package (2),
**characterised in that** the device (1) comprises cleaning means (7) for cleaning a detection-side interface (8) of the optical detection means (6), the cleaning means (7) being operable by moving the chamber parts (4, 5) between the open position and the closed position.

2. Device (1) according to claim 1, **characterised in that** the device comprises at least one guide plate (9) for guiding at least one chamber part (5) between the open position and the closed position along an axis (A).

3. Device (1) according to claim 2, **characterised in that** the optical detection means (6) are arranged (9) on the guide plate.

4. Device (1) according to one of claims 2 or 3, **characterised in that** the chamber (3) is constructed from a first fixed chamber part (4) and a second movable chamber part (5).

5. Device (1) according to one of claims 2 to 4, **characterised in that** the optical detection means (6) are aligned perpendicular to the axis (A).

6. Device (1) according to one of the claims 1 to 5, **characterised in that** the device comprises holding means (10) for holding the portion package (2) in an intermediate position between the chamber parts (4, 5) in the open position and in particular the optical detection means (6) are arranged in such a way that the identification can be detected in the intermediate position.

7. Device (1) according to one of the claims 1 to 6, **characterised in that** the device has an insertion opening for inserting the portion packaging (2) under the effect of gravity through an insertion shaft and, in particular, the optical detection means (6) are arranged in such a way that the identification can be detected when the portion packaging (2) passes through the insertion shaft.

8. Device (1) according to one of claims 1 to 7, **characterised in that** the cleaning means (7) are attached to a movable chamber part (5), in particular to a side plate (13) of such a chamber part.

9. Device (1) according to one of claims 1 to 8, **characterised in that** the cleaning means (7) are designed as tactile cleaning means.

10. Device (1) according to claim 9, **characterised in that** the cleaning means (7) are formed as a wiper blade, in particular of an elastomer.

11. Device (1) according to one of claims 1 to 10, **characterised in that** the device (1) has a control device connected to the optical detection means (6), by means of which the operating parameters of the device (1) can be controlled as a function of the identification detected by the optical detection means (6).

12. Device (1) according to claim 11, **characterised in that** operating parameters of the device (1) can be set manually or functions can be blocked automatically if the identification is not fully detected or is not known.

13. A beverage preparation system comprising a device (1) according to any one of claims 1 to 12 and a portion package (2) having an identifier.

14. Beverage preparation system according to claim 13, **characterised in that** the portion packaging (2) is a capsule with a preferably rotationally symmetrically formed capsule body consisting of a base and a side wall as well as a lid covering the capsule body, wherein the identification is preferably arranged on the side wall.

15. A beverage preparation system according to claim 14, **characterised in that** the identification applied to the capsule is in the form of a code running around the side wall.

## Revendications

1. Dispositif (1) pour la préparation d'une boisson à partir d'au moins une substance contenue dans un emballage-portion (2), comprenant :
- une chambre (3) conçue pour recevoir l'emballage de portions (2), qui est constituée d'au moins deux parties de chambre (4, 5) mobiles l'une par rapport à l'autre entre une position d'ouverture et une position de fermeture,
- moyen de faire passer un liquide à travers la chambre,
- des moyens de détection optique (6) pour détecter un identifiant appliqué sur ou dans l'emballage de portions (2),
**caractérisé en ce que** le dispositif (1) comprend des moyens de nettoyage (7) pour nettoyer une surface limite (8) côté détection des moyens de détection optiques (6), les moyens de nettoyage (7) pouvant être actionnés en déplaçant les parties de chambre (4, 5) entre la position ouverte et la position fermée.

2. Dispositif (1) selon la revendication 1, **caractérisé en ce que** le dispositif comprend au moins une plaque de guidage (9) pour guider au moins une partie de chambre (5) entre la position ouverte et la position fermée le long d'un axe (A) .

3. Dispositif (1) selon la revendication 2, **caractérisé en ce que** les moyens de détection optique (6) sont disposés (9) sur la plaque de guidage.

4. Dispositif (1) selon l'une des revendications 2 ou 3, **caractérisé en ce que** la chambre (3) est constituée d'une première partie de chambre fixe (4) et d'une deuxième partie de chambre mobile (5).

5. Dispositif (1) selon l'une des revendications 2 à 4, **caractérisé en ce que** les moyens de détection optique (6) sont orientés perpendiculairement à l'axe (A).

6. Dispositif (1) selon l'une des revendications 1 à 5, **caractérisé en ce que** le dispositif comporte des moyens de maintien (10) de l'emballage de portions (2) dans une position intermédiaire entre les parties de chambre (4, 5) en position ouverte, et en particulier les moyens de détection optique (6) sont disposés de manière à pouvoir détecter l'identifiant dans la position intermédiaire.

7. Dispositif (1) selon l'une des revendications 1 à 6, **caractérisé en ce que** le dispositif comporte une ouverture d'introduction pour introduire l'emballage-portion (2) sous l'effet de la gravité à travers une goulotte d'introduction, et en particulier les moyens de détection optique (6) sont disposés de manière à ce que l'identification puisse être détectée lors du passage de l'emballage-portion (2) dans la goulotte d'introduction.

8. Dispositif (1) selon l'une quelconque des revendications 1 à 7, **caractérisé en ce que** les moyens de nettoyage (7) sont montés sur une partie mobile (5) de la chambre, notamment sur une plaque latérale (13) d'une telle partie.

9. Dispositif (1) selon l'une des revendications 1 à 8, **caractérisé en ce que** les moyens de nettoyage (7) sont des moyens de nettoyage tactiles.

10. Dispositif (1) selon la revendication 9, **caractérisé en ce que** les moyens de nettoyage (7) sont réalisés sous la forme d'un balai d'essuyage, notamment en élastomère.

11. Dispositif (1) selon l'une des revendications 1 à 10, **caractérisé en ce que** le dispositif (1) présente un dispositif de commande relié aux moyens de détection optiques (6), par lequel les paramètres de fonctionnement du dispositif (1) peuvent être commandés en fonction de l'identifiant saisi par les moyens de détection optiques (6).

12. Dispositif (1) selon la revendication 11, **caractérisé en ce que**, lorsque l'identification n'est pas entièrement saisie ou n'est pas connue, des paramètres de fonctionnement du dispositif (1) peuvent être réglés manuellement ou des fonctions peuvent être bloquées automatiquement.

13. Système de préparation de boisson comprenant un dispositif (1) selon l'une des revendications 1 à 12 et un emballage-portion (2) avec un identifiant.

14. Système de préparation de boissons selon la revendication 13, **caractérisé en ce que** l'emballage-portions (2) est une capsule avec un corps de capsule réalisé de préférence à symétrie de révolution et composé d'un fond et d'une paroi latérale ainsi que d'un couvercle recouvrant le corps de capsule, l'identification étant de préférence disposée sur la paroi latérale.

15. Système de préparation de boissons selon la revendication 14, **caractérisé en ce que** l'identification apposée sur la capsule est réalisée sous la forme d'un code entourant la paroi latérale.
